# NOUVEAU FASCICULE DE BREVET EUROPEEN

(11) **EP 0 404 610 B2**
(45) Date de publication et mention de la décision concernant l'opposition: **29.01.1997**
(45) Mention de la délivrance du brevet: 26.01.1994
(21) Numéro de dépôt: 90401363.8
(22) Date de dépôt: 22.05.1990
(51) Int. Cl.: C04B 35/42, C04B 35/48

(54) **Compositions réfractaires contenant de la zircone monoclinique et articles formés à partir de ces compositions présentant une résistance mécanique à chaud et une résistance aux chocs thermiques améliorées**
Feuerfeste, monoklines Zirkon enthaltende Zusammensetzungen und daraus geformte Gegenstände, die mechanische Festigkeit bei erhöhter Temperatur und eine verbesserte Wärmeschockbeständigkeit aufweisen.
Refractory compositions of monoclinic zirconia and articles made therefrom, showing mechanical strength at elevated temperatures and an improved thermal shock resistance

(30) Priorité: 26.05.1989 FR 8906957
(43) Date de publication de la demande: 27.12.1990
(73) Titulaire: SAVOIE REFRACTAIRES, F-69631 Venissieux Cédex (FR)
(72) Inventeur: Schoennahl, Jacques, F-69100 Villeurbanne (FR)
(74) Mandataire: Colas, Jean-Pierre

(56) Documents cités:
- EP-A- 0 218 026
- EP-A- 0 252 598
- DE-C- 2 731 612
- DE-C- 3 507 877
- GB-A- 2 065 632
- US-A- 3 597 247
- R. Stevens, "Zirconia and Zirconia Ceramics", 1986

## Description

L'invention concerne de nouvelles compositions réfractaires contenant de la zircone monoclinique et des articles formés à partir de ces compositions présentant une résistance mécanique à chaud et une résistance aux chocs thermiques améliorées.

La demande de brevet GB-A-2065632 décrit un corps en ZrO₂/Mg₂SiO₄.

La demande de brevet EP-A-252598 décrit la formation de corps frittes en Al₂O₃, contenant des particules en ZrO₂ de tailles diverses.

Les industries verrière et métallurgique ont besoin de matériaux réfractaires de plus en plus performants.

La présente invention vise donc à fournir des compositions réfractaires convertissables en matériaux ou articles présentant une résistance aux chocs thermiques améliorée, et des propriétés de résistance mécanique à chaud, de résistance à la corrosion et de porosité similaires ou supérieures à celles des matériaux ou articles présentement utilisés.

Plus particulièrement, l'invention concerne une composition réfractaire comprenant, en poids :
(A) au moins 70% d'un agrégat à base d'oxydes réfractaires constitué à raison d'au moins 90% de son poids de particules ayant une grosseur supérieure à 20 µm, mais inférieure à 20 mm,
(B) de 7 à 25% d'une matrice constituée de particules réparties entre une fraction fine formée à raison d'au moins 95% de son poids de particules d'une grosseur de 1 à 20 µm, le diamètre médian de ces particules étant compris entre 3 et 8 µm, cette fraction fine constituant 1 à 24% de la composition, et une fraction ultra-fine constituée à raison d'au moins 70% de son poids par des particules ayant une grosseur inférieure à 1 µm, le diamètre médian de ces particules étant compris entre 0,3 et 0,8 µm, cette fraction ultrafine constituant 1 à 24% de la composition, ladite matrice comprenant
   (i) au moins un oxyde choisi dans la groupe formé par Al₂O₃ et Cr₂O₃, et constituant 6 à 24% de la composition, le Cr₂O₃ contenu dans la matrice ne constituant pas plus de 16% de la composition,
   (ii) de la zircone monoclinique en une proportion constituant de 1 à 9% de la composition, avec la condition que ladite matrice est exempte de silice; et
(C) de 0 à 6% au total d'un ou plusieurs additifs.

L'agrégat (A) forme au moins 70% du poids de la composition et est constitué à raison d'au moins 90% de son poids de particules ayant une grosseur supérieure à 20 µm mais inférieure à 20 mm.

L'agrégat à base d'oxydes réfractaires peut être formé de tous matériaux réfractaires convenant pour des applications verrières ou métallurgiques, parexemple le corindon, notamment le corindon noir, l'oxyde de chrome, notamment fritté, et les matériaux électrofondus à base d'Al₂O₃-Cr₂O₃, à base d'Al₂O₃-ZrO₂-SiO₂-Cr₂O₃ ou à base de MgO-Cr₂O₃.

La matrice (B) est constituée de particules réparties entre une fraction fine formée à raison d'au moins 95% de son poids de particules d'une grosseur de 1 à 20 µm, le diamètre médian de ces particules étant compris entre 3 et 8 µm, cette fraction fine constituant de 1 à 24% de la composition, et une fraction ultra-fine constituée à raison d'au moins 70% de son poids par des particules ayant une grosseur inférieure à 1 µm, le diamètre médian de ces particules étant compris entre 0,3 et 0,8 µm, cette fraction ultra-fine constituant de 1 à 24% du poids de la composition, avec la condition que le total fraction fine + fraction ultra-fine constitue de 7 à 25% du poids de la composition. Il est à noter que la fraction ultra-fine peut contenir jusqu'à 30% de particules plus grosses que 1 µm mais inférieures à 4 µm, car il n'est pas possible en pratique de séparer sélectivement les particules inférieures à 1 µm dans une fraction granulométrique. En fait, ces particules ultra-fines présentent une distribution de grosseurs "en cloche" dans l'intervalle allant d'environ 0,01 à 4 µm.

Du point de vue chimique, la matrice (B) est constituée (i) d'au moins un oxyde choisi parmi Al₂O₃, et Cr₂O₃ et qui constitue 6 à 24% du poids de la composition, de préférence 6 à 17%, avec la condition que le Cr₂O₃ contenu dans la matrice ne forme pas plus de 16% du poids de la composition, et (ii) de zircone monoclinique en une proportion constituant 1 à 9% du poids de la composition, de préférence de 2 à 8%. La matrice (B) doit par ailleurs être exempte de silice. La zircone monoclinique constitue l'ingrédient-clé de la composition de l'invention, car c'est elle qui permet d'obtenir l'amélioration de la résistance aux chocs thermiques. Il est à noter toutefois que l'incorporation de plus de 8-9% de zircone monoclinique dans la matrice ne donne pas d'amélioration supplémentaire de la résistance au choc thermique. Dans le cadre de l'invention, l'expression "zircone monoclinique" désigne toute zircone comprenant au moins 80% en poids de la phase monoclinique. Cette expression englobe donc, outre la zircone monoclinique pure, des zircones partiellement stabilisées, par exemple à la chaux. Les zircones monocliniques utilisées peuvent être de toutes origines, par exemple chimiques, électrofondues pures, partiellement stabilisées ou naturelles (baddéléyite).

Le constituant optionnel (C) de la composition de l'invention peut consister en un ou plusieurs additifs et constitue au plus 6% du poids de la composition.

Comme exemples d'additifs utilisables, on peut citer, de façon non limitative :
- des liants temporaires organiques, tels que des résines, la carboxyméthylcellulose, la dextrine, etc.;
- des liants chimiques, tels que l'acide phosphorique, le monophosphate d'aluminium, etc.
- des liants hydrauliques, tels que des ciments alumineux comme le ciment SECAR 71;
- des défloculants, tels que des polyphosphates de métaux alcalins;
- des promoteurs de frittage tels que le bioxyde de titane (en une proportion n'excédant pas 2% environ du poids de la composition) ou l'hydroxyde de magnésium.

Dans le cas où la composition contient un liant chimique ou hydraulique, elle constitue alors un béton, pouvant être mis en oeuvre par vibration, durcissant à froid en présence d'eau.

La composition de l'invention peut être conformée à la forme voulue dans un moule de géométrie appropriée par pressage et frittage à haute température (par exemple pour fabriquer des briques) ou être appliquée en un revêtement, par exemple par damage, ou être utilisée à des fins de réparation de parties de four endommagées. D'autres modes d'utilisation de la composition de l'invention seront évidents pour l'homme de l'art.

La matrice (B) est la partie active de la composition qui sera le siège des phénomènes de frittage à haute température, tandis que l'agrégat (A) demeure inerte durant le processus de frittage. La température de frittage à employer est fonction de la composition de la matrice (B), mais habituellement une température de l'ordre de 1500°C sera appropriée dans la plupart des cas.

Les produits de l'invention sont utiles par exemple sous forme de blocs à base d'oxyde de chrome frittés pour le revêtement des cuves de fours de fusion de verres textiles ; de busettes de coulée continue à base de matériau réfractaire du type Al₂O₃-Cr₂O₃ frittés ; de chenaux de coulée de fours électriques d'aciérie à arc en béton à haute teneur d'alumine (corindon).

Les exemples non limitatifs suivants sont donnés en vue d'illustrer l'invention. Dans ces exemples, on a utilisé les essais suivants pour mesurer les propriétés de résistance au choc thermique, de résistance à la flexion, de résistance au fluage à 1500°C, et de résistance à la corrosion.
Essai de résistance au choc thermique : on a adopté l'essai normalisé PRE III.26/PRE/R.5.1/78 pour déterminer le comportement au choc thermique par la perte relative de résistance à la flexion (ΔMOR) après un ou plusieurs cycles consistant chacun à chauffer l'éprouvette d'essai de la température ambiante jusqu'à une température maximale T, à maintenir l'éprouvette à cette température T pendant 30 minutes, puis à plonger l'éprouvette dans de l'eau froide.

Les éprouvettes sont des barreaux de 125 x 25 x 25 mm ne comportant aucune face de peau.

La température maximale T est ajustée en fonction de la sensibilité au choc thermique du type de produit étudié. Ainsi, dans le cas de produits à très haute teneuren Cr₂O₃ (produits du tableau 2) qui sont extrêmement sensibles au choc thermique, la température maximale adoptée est de 1000°C, alors qu'elle est de 1200°C pour les autres produits.
Essai de résistance à la flexion à 1500°C : on a utilisé la norme PRE III.25/R.18/78.
Essai de résistance au fluage à 1500°C : on a utilisé l'essai normalisé PRE III.24/PRE/R6/78 qui est un essai de fluage à température constante (1500°C) sous une contrainte de compression.
Essai de résistance à la corrosion : on a utilisé un essai de corrosion dynamique dit au "petit four tournant", tel que décrit au 8ème Congrès International du Verre à Londres en 1968, dans lequel on mesure le volume de matière corrodé ou la profondeur de la cicatrice formée. En fonction des besoins, on utilise dans cet essai comme agent agressif soit du verre, soit un métal, soit un laitier à l'état fondu.

Dans le cas des produits du tableau 3, le revêtement interne de ce four tournant comprenait 12 claveaux constitués du matériau à tester, formant une couronne de diamètre intérieur de 270 mm de 100 mm de hauteur tournant à 6 tours par minute. Les laitiers ont été préalablement fondus dans un four électrique et introduits dans le four de corrosion à la température de l'essai. Pour l'essai avec le laitier (a), la durée a été de 72 heures à 1500°C et ce laitier était formé, en poids, de :
- FeO: : 26,6%
- SiO₂: : 28,9%
- CaO: : 15,4%
- ZnO: : 9,8%
- Al₂O₃: : 7,8%
- SnO: : 5,5%
- PbO: : 1,2%, et
- MgO: : 1,45%

Pour l'essai avec le laitier (b), ce laitier étant formé de fayalite obtenue par fusion préalable de 70% en poids de battitures de fer et de 30% en poids de silice, la durée a été de 6 heures et l'atmosphère du four tournant a été maintenue réductrice par 4% en volume de CO.

Dans les exemples, on a employé les matières premières suivantes :

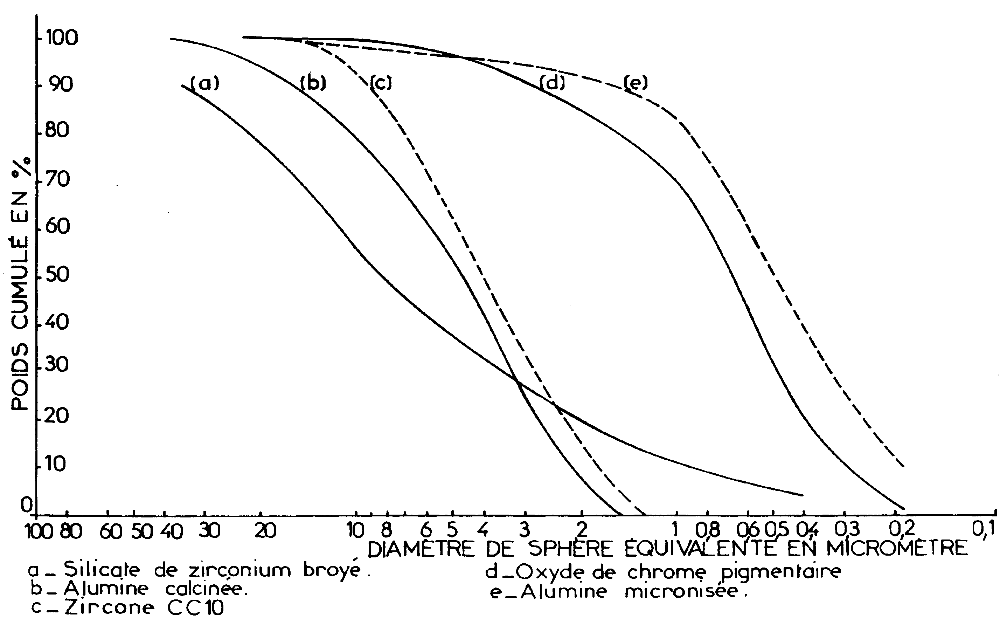

La figure unique est un graphique indiquant les caractéristiques granulométriques des divers composants constituant la matrice, soit pour les produits selon l'invention, soit pour les produits témoins, décrits dans les exemples.

La zircone CC10 est une zircone monoclinique vendue par la Société Européenne des Produits Réfractaires qui comprend en poids, 98,5% de ZrO₂ + HfO₂, ayant un diamètre médian des particules de 3,9 µm et une masse volumique de 5750 kg/m³.

Le silicate de zirconium rebroyé, utilisé dans un produit-témoin, est obtenu à partir d'un sable de zircon titrant analytiquement en poids, environ 65% de ZrO₂, 34% de SiO₂ et 1% d'impuretés.

L'alumine calcinée et l'alumine micronisée ont les caractéristiques granulométriques indiquées par la figure. Leurs diamètres médians sont d'environ 4,5 µm et 0,45 µm, respectivement.

L'oxyde de chrome pigmentaire est un oxyde à plus de 98% de Cr₂O₃. Son diamètre médian est d'environ 0,65 µm.

La silice thermique est une silice constituée essentiellement de microsphères de silice vitreuse dont les particules sont à 90% inferieures à 4 µm et à 10% inférieures de 0,2 µm, le diamètre médian des particules étant de 0,7 µm ; ont une surface spécifique BET de 12,7 m²/g, et présentent l'analyse chimique moyenne suivante, en poids : SiO₂ > 94%, Al₂O₃ = 3,4%, ZrO₂ = 1,3%, Fe₂O₃ = 0,25%, Na₂O = 0,16% et CaO = 0,10%.

Les produits utilisés comme additifs sont :
Le ciment SECAR 71 vendu par la Société LAFARGE.
L'oxyde de titane est la qualité anatase vendue par la Société THANN et MULHOUSE.
Le bentonil C est une argile bentonitique.
La dextrine est un liant organique bien connu.
Le FFB32 est un phosphate d'aluminium acide du commerce, vendu parla Société de Matière et de Gestion Industrielle.
Les défloculants sont des polyélectrolytes du commerce tels que les polyphosphates de sodium.
L'hydroxyde de magnésium est le produit courant du commerce.
Les agrégats utilisés dans les exemples des tableaux 1 à 7 sont :
   - le corindon noir
   - une chamotte de CR100 qui est un oxyde de chrome fritté en présence de 2% de TiO₂ vendu par la Demanderesse
   - des grains du produit ER 2161 qui est un réfractaire électrofondu du type Al₂O₃-ZrO₂-SiO₂-Cr₂O₃ vendu par la Société Européenne des Produits Réfractaires.

Les abréviations suivantes ont été utilisées dans les tableaux des exemples ci-après :
La lettre A après un constituant signifie qu'il est un composant de l'agrégat.
La lettre M après un constituant signifie qu'il est un composant de la matrice.
Les lettres AD après un constituant signifient qu'il constitue un additif.

Il convient de noter, en outre, que les proportions des constituants sont données en % en poids par rapport au total de la composition, sauf dans le cas de certains additifs dont la proportion est donnée en % en poids par rapport au reste de la composition. Dans ce dernier cas, le pourcentage indiqué est précédé du signe +.

### Exemple 1 et exemples-témoins 1 et 2

On prépare trois bétons du type alumine-Cr₂O₃ ayant les compositions indiquées dans le tableau 1.

Le béton de l'exemple 1 contient de la zircone monoclinique conformément à la présente invention, tandis que le béton de l'exemple-témoin 1 ne contient pas de zircone et le béton de l'exemple-témoin 2 contient du silicate de zirconium.

Après cuisson à 1500°C de ces bétons, on a déterminé leur résistance au fluage à 1500°C sous une contrainte de compression de 2 bars ainsi que leur résistance au choc thermique par l'essai précité.

Le béton de l'exemple-témoin 1 présente une mauvaise résistance au choc thermique, étant endommagé après un seul cycle thermique. Les résistances au choc thermique des bétons de l'exemple 1 selon l'invention et de l'exemple-témoin 2 sont nettement améliorées par l'addition de zircone monoclinique et de silicate de zirconium, respectivement. Toutefois, le béton de l'exemple-témoin 2 présente une médiocre résistance au fluage. Par conséquent, seule la zircone monoclinique permet à la foi d'améliorer la résistance au choc thermique et de conserver une résistance au fluage correcte.

### Exemples 2 et 3 et exemple-témoin 3

On prépare trois compositions réfractaires à haute teneur en Cr₂O₃ à partir des constituants indiqués dans le tableau 2. Ces compositions sont ensuite pressées dans des moules sous une pression de 800 bars puis cuites à 1500°C afin de fritter la matrice.

On voit d'après les propriétés des produits que l'incorporation de zircone monoclinique dans les produits des exemples 2 et 3 améliore fortement la résistance au choc thermique des produits frittés par rapport à celle du produit de l'exemple-témoin 3 qui est exempt de zircone, et cela d'autant plus que la proportion de zircone monoclinique est élevée.

### Exemple 4 et exemple-témoin 4

On prépare deux bétons comprenant un agrégat du type Al₂O₃-Cr₂O₃-ZrO₂-SiO₂ de compositions similaires indiquées dans le tableau 3, sauf que de la zircone monoclinique est substituée dans l'exemple 4 à l'alumine contenue dans la matrice de l'exemple-témoin 4.

On voit d'après les résultats donnés dans le tableau 3 que, bien qu'une quantité importante de zircone soit apportée par l'agrégat dans les deux cas, l'incorporation de zircone monoclinique dans la matrice améliore fortement la résistance au choc thermique.

### Exemple 5 et exemple-témoin 5

On prépare, par pressage puis cuisson à 1500°C, deux briques réfractaires à basse teneur en Cr₂O₃ et à liant phosphorique ayant les compositions mentionnées dans le tableau 4, la matrice de l'une de ces briques contenant de la zircone monoclinique (exemple 5) et la matrice de l'autre (témoin 5) n'en contenant pas.

On voit, d'après les résultats donnés dans le tableau 4 que la présence de zircone monoclinique dans la matrice de la brique de l'exemple 5 améliore notablement la résistance au choc thermique de la brique. On observe que les propriétés de résistance mécanique de la brique selon l'invention se maintiennent à haute température (1600°C) à un niveau largement supérieur à celui de la brique-témoin.

### Exemple 6 et exemple-témoin 6

On prépare deux bétons réfractaires à base d'alumine dont la matrice contient du Cr₂O₃ et de l'Al₂O₃ ayant les compositions indiquées dans le tableau 5, la matrice de l'un (exemple 6) contenant de la zircone monoclinique et la matrice de l'autre (exemple-témoin 6) n'en contenant pas.

On voit d'après les résultats des essais obtenus, qui sont indiqués au tableau 5, que l'incorporation de zircone monoclinique dans la matrice améliore sensiblement la résistance au choc thermique du béton réfractaire, tout en n'affectant pas la résistance au fluage à haute température.

### Exemple 7 et exemple-témoin 7

On prépare deux bétons réfractaires à base d'alumine ayant les compositions indiquées dans le tableau 6, la matrice de l'un (exemple 7) contenant de la zircone monoclinique et la matrice de l'autre (exemple-témoin 7) n'en contenant pas.

D'après les résultats des essais récapitulés au tableau 6, on voit que l'incorporation de zircone monoclinique dans la matrice du béton selon l'invention améliore fortement la résistance au choc thermique.

### Exemple 8

Cet exemple montre que l'incorporation de zircone monoclinique n'a d'intérêt que lorsque la matrice n'apporte pas plus de 1% en poids de silice par rapport à la composition.

Une série de six bétons réfractaires A à F contenant des proportions croissantes de silice dans la matrice et contenant ou non de la zircone monoclinique dans la matrice a été préparée. Les compositions de ces bétons et leurs propriétés sont récapitulés dans le tableau 7. Les bétons B et D font partie de l'invention.

On voit d'après les résultats que l'incorporation de zircone monoclinique a un effet bénéfique sur la résistance au choc thermique tant que la proportion de silice dans la matrice n'excède pas 1% en poids par rapport à la composition. Pour des proportions plus élevées de silice, l'incorporation de zircone monoclinique ne donne pratiquement aucun avantage particulier, les produits à teneur élevée en silice ultra-fine présentant intrinsèquement une bonne tenue au choc thermique, au détriment cependant de leur résistance à la corrosion qui est médiocre.

### Exemple 9

Dans cet exemple on a comparé l'action de l'introduction de zircone monoclinique électrofondue d'une grosseur de particules d'un diamètre médian de 300 µm environ (agrégat) avec celle de l'introduction de zircone monoclinique chimique d'une grosseur de particules d'un diamètre médian de 4 µm environ (matrice) en préparant des bétons ayant des compositions dérivant de celle de la composition A du tableau 7.

Dans le premier cas, on a substitué 4% de corindon d'une grosseur de 0,2-2 mm par 4% de zircone électrofondue d'un diamètre médian de 300 µm et dans le second cas, on a substitué 4% d'alumine calcinée par de la zircone monoclinique d'un diamètre médian de 4 µm.

Dans le cas de l'incorporation de zircone d'une grosseur de 300 µm, on a obtenu une valeur Δ MOR%, 1 cycle de -93 alors que dans le cas de l'incorporation de zircone d'une grosseur de 4 µm, on a obtenu une valeur Δ MOR%, 1 cycle de -86, les bétons ayant été cuits à 1500°C.

Il va de soi que les modes de réalisation décrits ne sont que des exemples et qu'on pourrait les modifier, notamment par substitution d'équivalents techniques, sans sortir pour cela du cadre de l'invention.

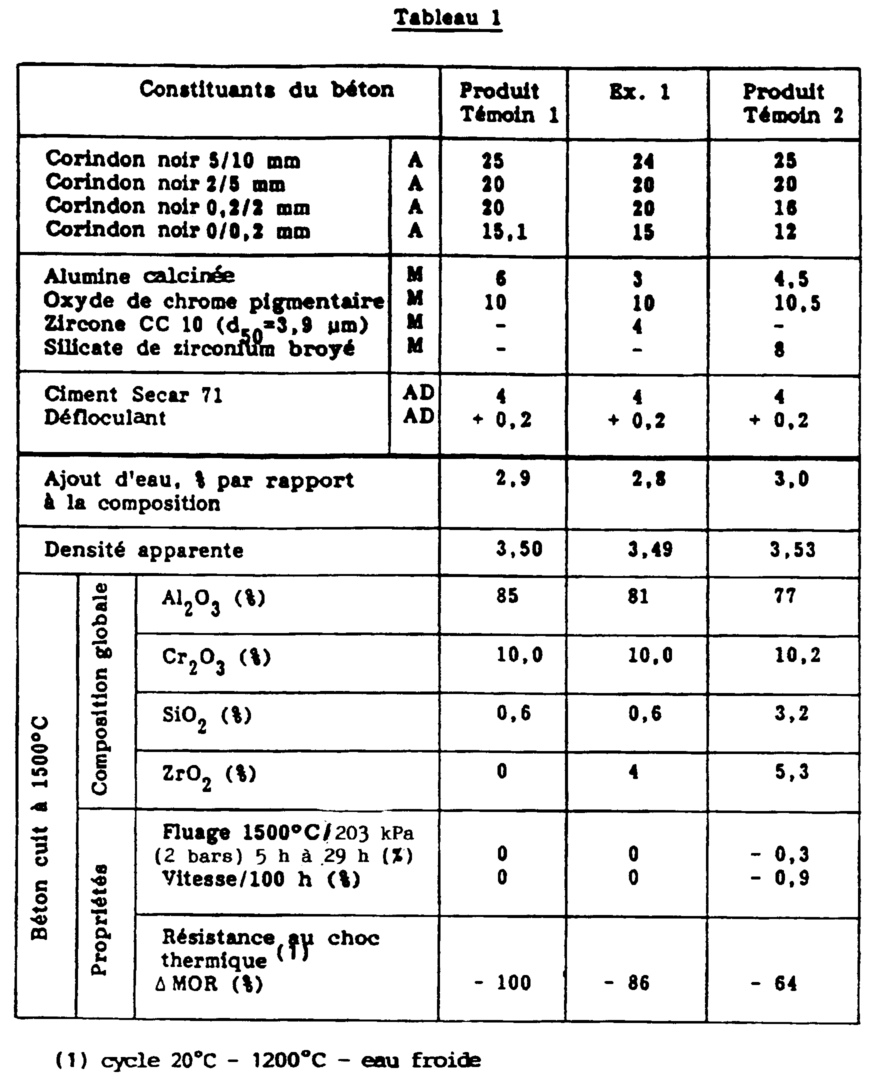

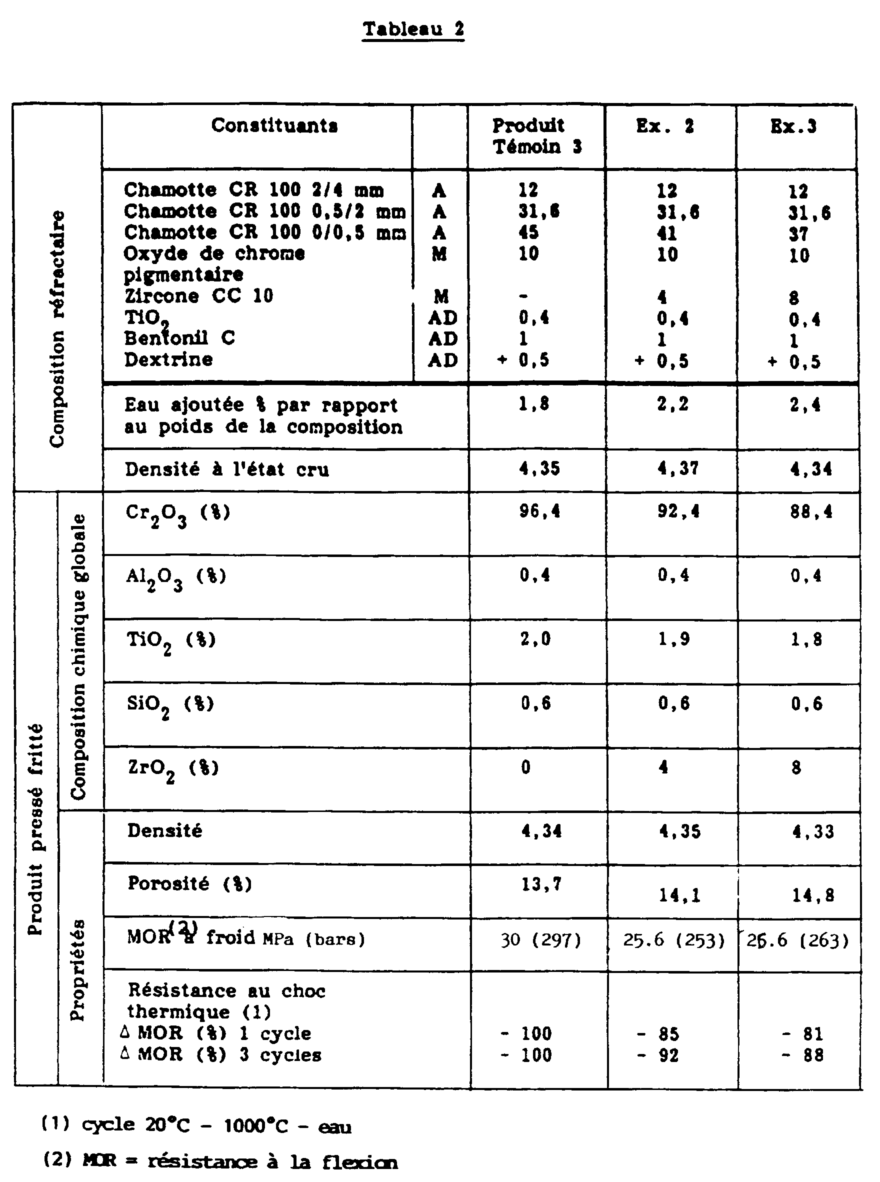

**Tableau 3**

| Constituants du béton | | | Produit-témoin 4 | Ex. 4 |
|---|---|---|---|---|
| Agrégat ER 2161 - 2/4 mm | | A | 35 | 35 |
| Agrégat ER 2161 - 0,5/2mm | | A | 18 | 18 |
| Agrégat ER 2161 - 0/0,5mm | | A | 8 | 8 |
| Corindon noir - 0/0,2 mm | | A | 15 | 15 |
| Oxyde de chrome pigmentaire | | M | 15 | 15 |
| Ciment Secar 71 | | AD | 4 | 4 |
| Défloculant | | AD | + 0,2 | + 0,2 |
| Alumine calcinée | | M | 5 | - |
| Zircone CC 10 | | M | - | 5 |
| Eau | | | + 3,6 | + 3,4 |
| Béton Tempéré à 450°C | Densité | | 3,55 | 3,53 |
| | Porosité (%) | | 14 | 16 |
| | Résistance mécanique (bars) | | 1040 | 1180 |
| Béton cuit à 1500°C | Al₂O₃ (%) | | 39,6 | 34,7 |
| | Cr₂O₃ (%) | | 30,4 | 30,4 |
| | ZrO₂ (%) | | 17,3 | 22,2(2) |
| | SiO₂ (%) | | 9 | 9 |
| | MOR à froid MPa(bars) | | 28.4 (280) | 28.4 (280) |
| | MOR à 1500°C MPa (bars) | | 7.1 (70) | 9.6 (95) |
| | Résistance au choc thermique (1) Δ MOR (%), 1 cycle | | - 89 | - 80 |

| | Résistance à la corrosion à 1500°C (cicatrice en mm) | | | |
|---|---|---|---|---|
| | a) laitier | | ≃ 2 | ≃ 2,1 |
| | b) fayalite | | ≃ 6 | ≃ 7 |

| | | | | |
|---|---|---|---|---|
| (1) Cycle 20°C - 1200°C - Eau | | | | |
| (2) dont 5% apporté par la Zircone CC10 de la matrice. | | | | |

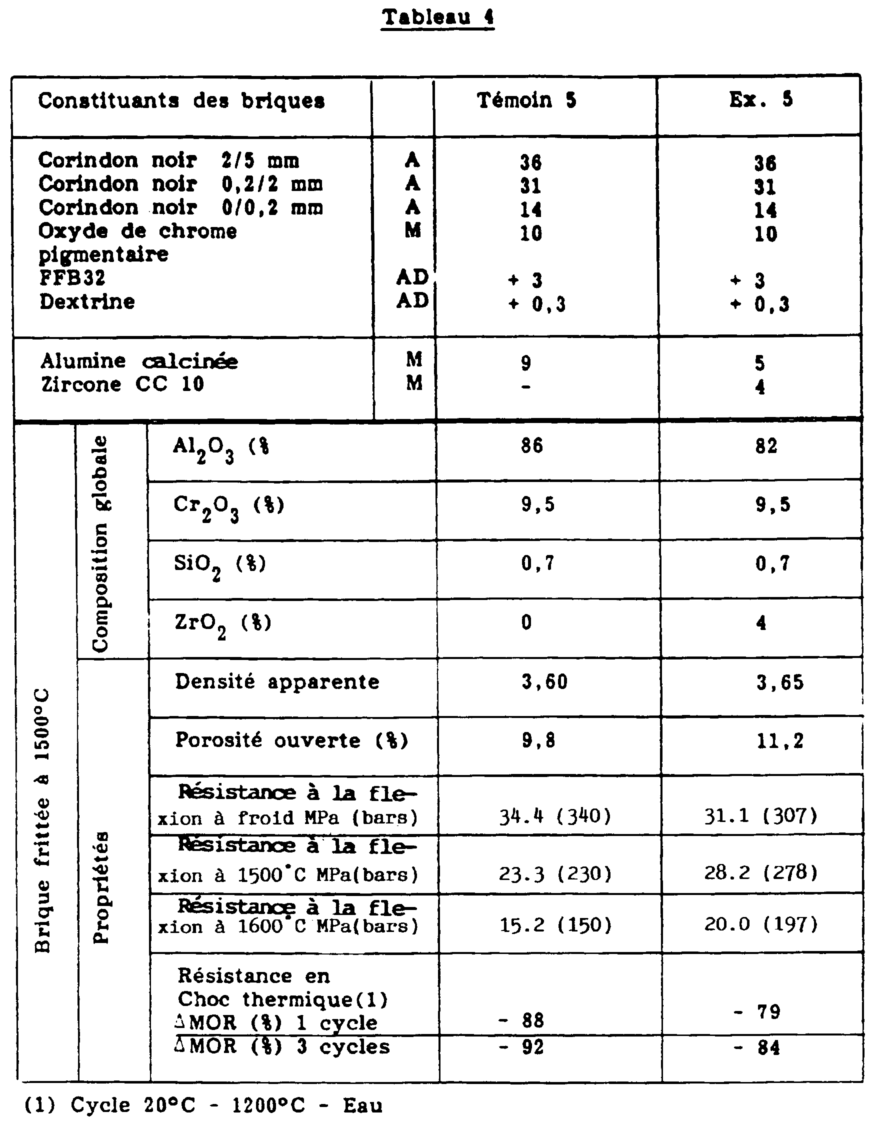

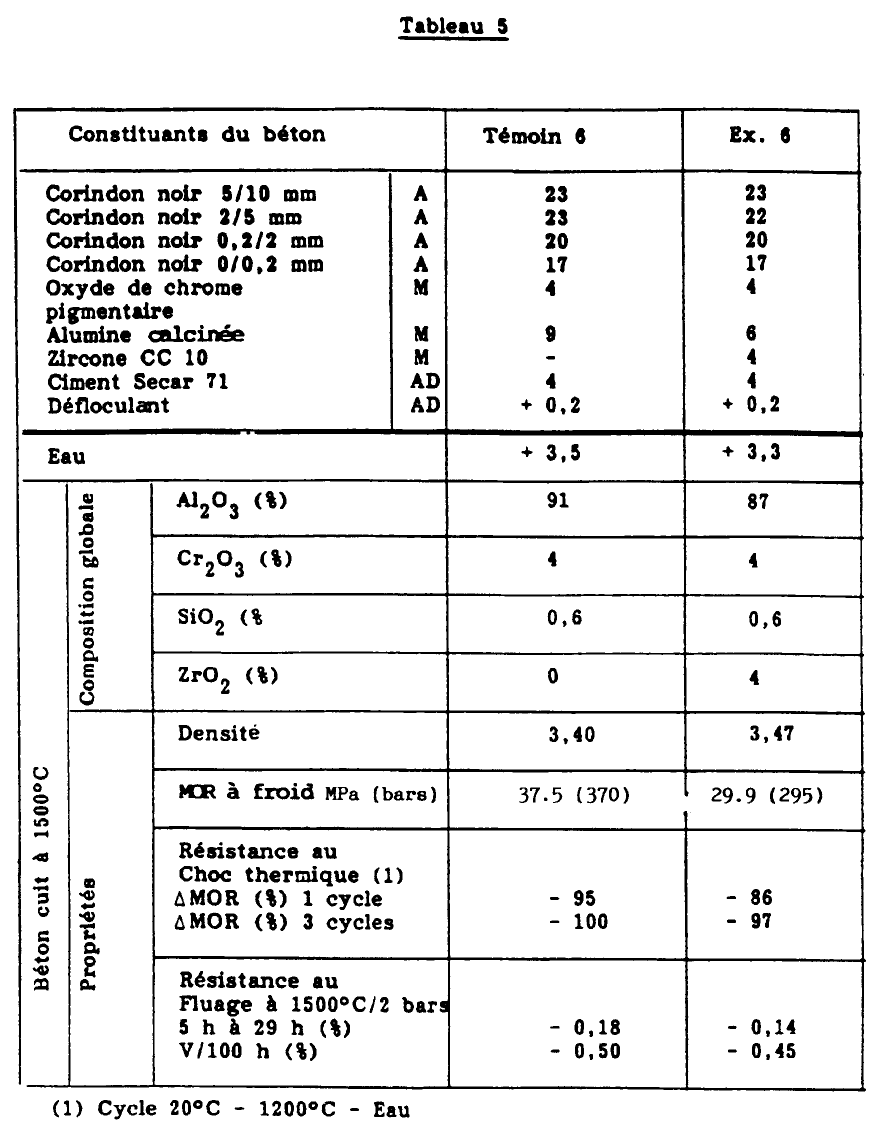

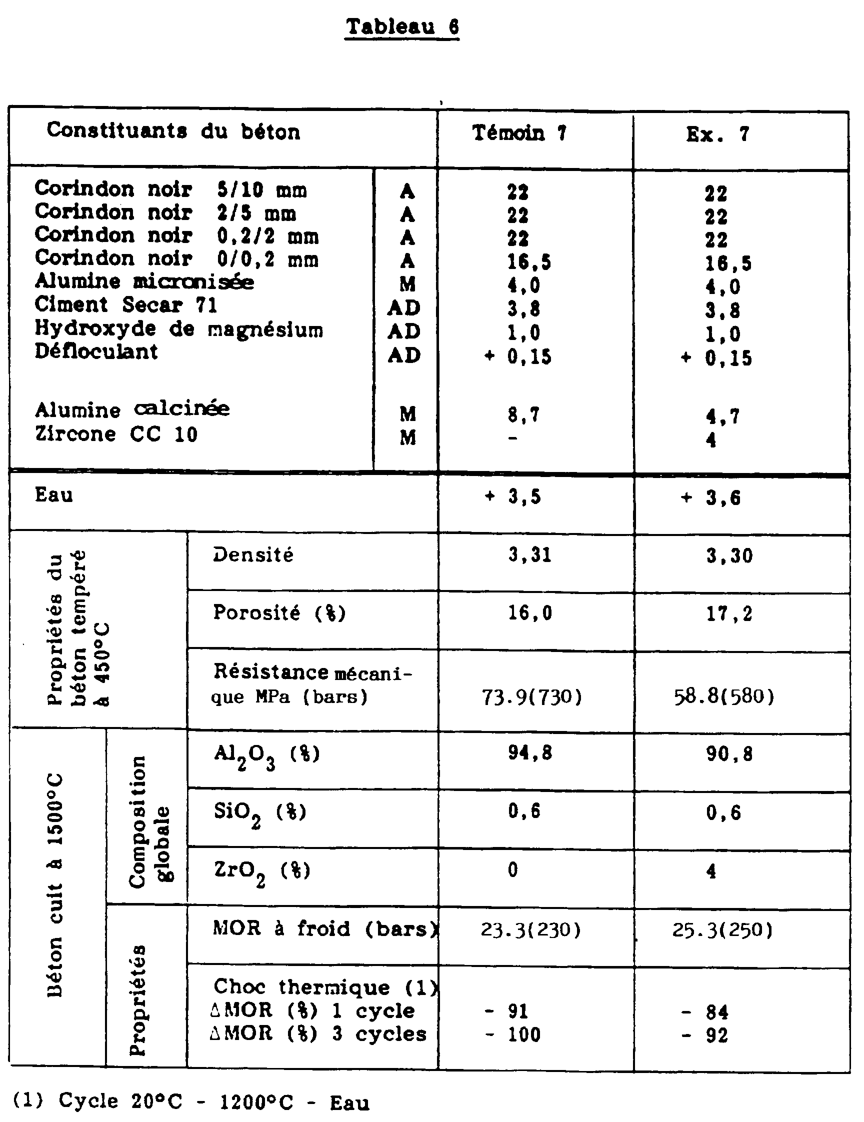

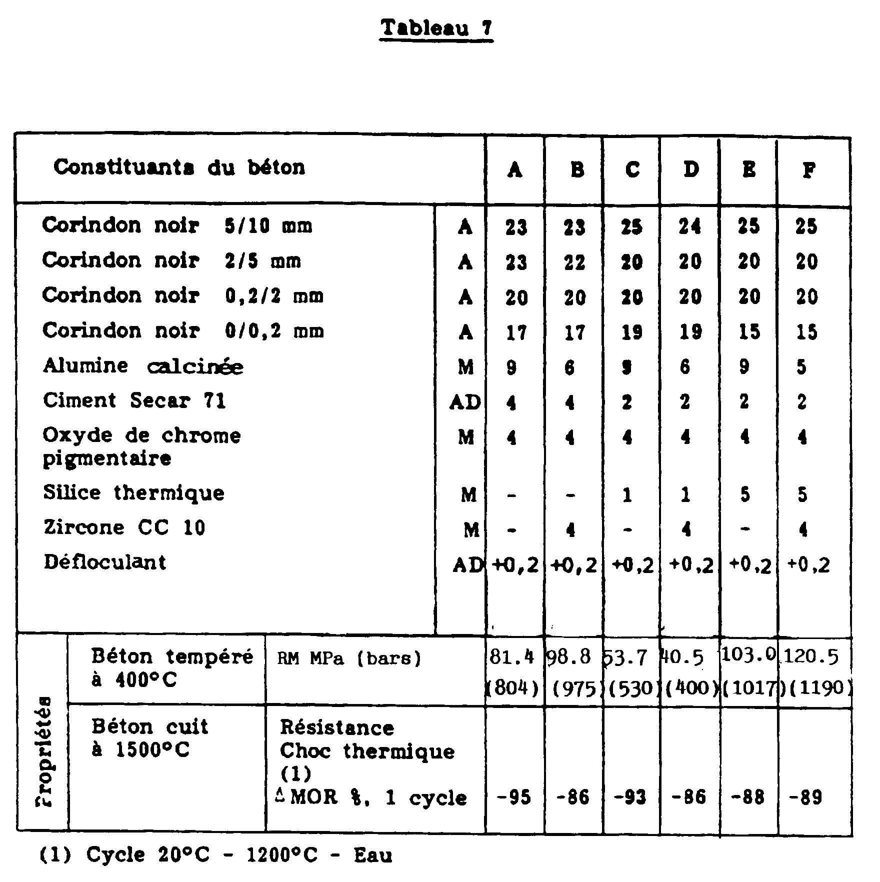

## Revendications

1. Composition réfractaire comprenant, en poids :
(A) au moins 70% d'un agrégat à base d'oxydes réfractaires constitué à raison d'au moins 90% de son poids de particules ayant une grosseur supérieure à 20 µm, mais inférieure à 20 mm,
(B) de 7 à 25% d'une matrice constituée de particules réparties entre une fraction fine formée à raison d'ou moins 95% de son poids de particules d'une grosseur de 1 à 20 µm, le diamètre médian de ces particules étant compris entre 3 et 8 µm, cette fraction fine constituant 1 à 24% de la composition, et une fraction ultra-fine constituée à raison d'au moins 70% de son poids par des particules ayant une grosseur inférieure à 1 µm, le diamètre médian de ces particules étant compris entre 0,3 et 0,8 µm, cette fraction ultra-fine constituant 1 à 24% de la composition, ladite matrice comprenant
(i) au moins un oxyde choisi dans la groupe formé par Al₂O₃ et Cr₂O₃ et constituant 6 à 24% de la composition, le Cr₂O₃ contenu dans la matrice ne constituant pas plus de 16% de la composition,
(ii) de la zircone monoclinique en une proportion constituant de 1 à 9% de la composition, avec la condition que ladite matrice est exempte de silice ; et
(C) de 0 à 6% au total d'un ou plusieurs additifs.

2. Composition réfractaire selon la revendication 1, caractérisée en ce que le total de Al₂O₃ et de Cr₂O₃ présent dans la matrice constitue de 6 à 17% du poids de la composition.

3. Composition réfractaire selon la revendication 1 ou 2, caractérisée en ce que la zircone monoclinique présente dans la matrice constitue de 2 à 8% du poids de la composition.

4. Composition réfractaire selon l'une quelconque des revendications 1 à 3, caractérisée en ce qu'elle contient, comme additif, un liant hydraulique, de manière à former un béton durcissant à froid en présence d'eau.

5. Composition réfractaire selon l'une quelconque des revendications 1 à 3, caractérisée en ce qu'elle contient, comme additif, un liant chimique, de manière à former un béton durcissant à froid en présence d'eau.

6. Composition réfractaire selon l'une quelconque des revendications 1 à 3, caractérisée en ce qu'elle contient un promoteur de frittage.

7. Composition réfractaire selon la revendication 6, caractérisée en ce que le promoteur de frittage est du bioxyde de titane en une proportion n'excédant pas 2% du poids de la composition.

8. Articles réfractaires formées par frittage à haute température d'une composition selon l'une quelconque des revendications 1, 2, 3, 6 et 7.

9. Articles et revêtements réfractaires formés par durcissement d'une composition selon la revendication 4 ou 5.

## Claims

1. A refractory composition comprising, by weight :
(A) at least 70% of an aggregate based on refractory oxides, consisting of a proportion of at least 90% of its weight of particles larger than 20 µm but smaller than 20 mm in size,
(B) from 7 to 25% of a matrix consisting of particles distributed between a fine fraction made up of a proportion of at least 95% of its weight of particles from 1 to 20 µm in size, the median diameter of these particles being between 3 and 8 µm, this fine fraction constituting 1 to 24% of the composition, and an ultrafine fraction consisting of a proportion of at least 70% of its weight of particles smaller than 1 µm in size, the median diameter of these particles being between 0.3 and 0.8 µm, this ultrafine fraction constituting 1 to 20% of the composition, the said matrix comprising
(i) at least one oxide chosen from the group consisting of Al₂O₃ and Cr₂O₃ and constituting 6 to 24% of the composition, the Cr₂O₃ present in the matrix constituting not more than 16% of the composition,
(ii) monoclinic zirconia in a proportion constituting from 1 to 9% of the composition, with the proviso that said matrix is free of silica ; and
(C) a total from 0 to 6% of one or more additives.

2. The refractory composition as claimed in claim 1, characterized in that the total of Al₂O₃ and of Cr₂O₃ present in the matrix constitutes from 6 to 17% of the weight of the composition.

3. The refractory composition as claimed in claim 1 or 2, characterized in that the monoclinic zirconia present in the matrix constitutes from 2 to 8% of the weight of the composition.

4. The refractory composition as claimed in any of claims 1 to 3, characterized in that it contains a hydraulic binder as additive, so as to form a cold-setting concrete in the presence of water.

5. The refractory composition as claimed in any of claims 1 to 3, characterized in that it contains a chemical binder as additive, so as to form a cold-setting concrete in the presence of water.

6. The refractory composition as claimed in any of claims 1 to 3, characterized in that it contains a sintering promoter.

7. The refractory composition as claimed in claim 6, characterized in that the sintering promoter is titanium dioxide in a proportion not exceeding 2% of the weight of the composition.

8. Refractory articles formed by sintering at high temperature a composition as claimed in any of claims 1, 2, 3, 6 and 7.

9. Refractory articles and linings formed by setting a composition as claimed in claim 4 or 5.

## Patentansprüche

1. Hitzebeständige Zusammensetzung, gewichtsbezogen umfassend:
(A) wenigstens 70% eines Aggregats auf der Grundlage hitzebeständiger Oxide, aufgebaut im Verhältnis von wenigstens 90% seines Gewichts aus Teilchen mit einer Größe von mehr als 20 µm, aber weniger als 20 mm;
(B) 7 bis 25% einer Matrix, aufgebaut aus Teilchen, die sich verteilen auf eine feine Fraktion, gebildet im Verhältnis von wenigstens 95% ihres Gewichts aus Teilchen mit einer Größe von 1 bis 20 µm, wobei der mittlere Durchmesser dieser Teilchen zwischen 3 und 8 µm liegt, wobei diese feine Fraktion 1 bis 24% der Zusammensetzung bildet, sowie einer ultrafeinen Fraktion, gebildet im Verhältnis von wenigstens 70% ihres Gewichts aus Teilchen mit einer Größe von weniger als 1 µm, wobei der mittlere Durchmesser dieser Teilchen zwischen 0,3 und 0,8 µm liegt, wobei diese ultrafeine Fraktion 1 bis 24% der Zusammensetzung bildet, wobei die Matrix umfaßt:
(i) wenigstens ein Oxid, das ausgewählt ist aus der Gruppe bestehend aus Al₂O₃ und Cr₂O₃ und 6 bis 24% der Zusammensetzung ausmacht, wobei der Cr₂O₃-Gehalt in der Matrix nicht mehr als 16% der Zusammensetzung ausmacht;
(ii) monoklines Zirconiumoxid in einem Verhältnis, das 1 bis 9% der Zusammensetzung ausmacht; Mit der Voraussetzung dass die Matrix kein Siliziumdioxyd enthalt ; und
(C) insgesamt 0 bis 6% eines oder mehrerer Zusätze.

2. Hitzebeständige Zusammensetzung nach Anspruch 1, dadurch gekennzeichnet, daß die Summe des in der Matrix vorhandenen Al₂O₃ und Cr₂O₃ 6 bis 17% des Gewichts der Zusammensetzung ausmacht.

3. Hitzebeständige Zusammensetzung nach Anspruch 1 oder 2, dadurch gekennzeichnet, daß das in der Matrix vorhandene monokline Zirconiumoxid 2 bis 8% des Gewichts der Zusammensetzung ausmacht.

4. Hitzebeständige Zusammensetzung nach irgendeinem der Ansprüche 1 bis 3, dadurch gekennzeichnet, daß sie als Additiv ein hydraulisches Bindemittel enthält, so daß ein Beton gebildet wird, der in der Kälte in Gegenwart von Wasser härtet.

5. Hitzebeständige Zusammensetzung nach irgendeinem der Ansprüche 1 bis 3, dadurch gekennzeichnet, daß sie als Additiv ein chemisches Bindemittel enthält, so daß ein Beton gebildet wird, der in der Kälte in Gegenwart von Wasser härtet.

6. Hitzebeständige Zusammensetzung nach irgendeinem der Ansprüche 1 bis 3, dadurch gekennzeichnet, daß sie einen Sinterungsbeschleuniger enthält.

7. Hitzebeständige Zusammensetzung nach Anspruch 6, dadurch gekennzeichnet, daß der Sinterungsbeschleuniger Titandioxid ist in einem Verhältnis, das 2% des Gewichts der Zusammensetzung nicht übersteigt.

8. Hitzebeständige Gegenstände, gebildet durch Sintern einer Zusammensetzung nach irgendeinem der Ansprüche 1, 2, 3, 6 und 7 bei hoher Temperatur.

9. Hitzebeständige Gegenstände und Beläge, gebildet durch Härten einer Zusammensetzung nach Anspruch 4 oder 5.
